# EUROPÄISCHE PATENTANMELDUNG

(11) **EP 4 254 238 A1**
(43) Veröffentlichungstag der Anmeldung: **04.10.2023**
(21) Anmeldenummer: 22165937.8
(22) Anmeldetag: 31.03.2022
(51) Int. Cl.: G06F 21/55, H04L 9/40, H04W 4/20

(54) **VERFAHREN ZUM AUFBEREITEN VON LOGNACHRICHTEN IN EINEM COMPUTERNETZWERK-SYSTEM, SOWIE COMPUTERNETZWERK-SYSTEM, COMPUTERPROGRAMM UND ELEKTRONISCH LESBARER DATENTRÄGER**

(71) Anmelder: Siemens Aktiengesellschaft, 80333 München (DE)
(72) Erfinder: Feist, Christian Peter, 80689 München (DE); Knierim, Christian, 81373 München (DE)
(74) Vertreter: Siemens Patent Attorneys

(57) **Zusammenfassung**

Die Erfindung betrifft ein Verfahren zum Aufbereiten von Lognachrichten (8) in einem Computernetzwerk-System (1), wobei
- die Lognachrichten (8) von einer Recheneinheit (2) des Computernetzwerk-Systems (1) generiert werden,
- die generierten Lognachrichten (8) von der Recheneinheit (2) zur Übertragung an eine Log-Nachrichten -Speichereinheit (9) des Computernetzwerk-Systems (1) bereitgestellt werden,
- die Recheneinheit (2) überprüft, ob die bereitgestellten Lognachrichten (8) unter einer vorgegebenen Bedingung an die Lognachrichten-Speichereinheit (9) übertragen werden können, und
- falls nicht: die bereitgestellten Lognachrichten (8) in Abhängigkeit von einer Korrelationsbedingung (18) miteinander zu einer Kombinations-Lognachricht (17) zusammengefasst werden, und
- die Kombinations-Lognachricht (17) an die Lognachrichten-Speichereinheit (9) übertragen wird.

Des Weiteren betrifft die Erfindung ein Computernetzwerk-System (1) sowie Computerprogramm (6) und elektronisch lesbarer Datenträger (7).

## Beschreibung

Die Erfindung betrifft ein Verfahren zum Aufbereiten von Lognachrichten in einem Computernetzwerk-System.

Des Weiteren betrifft die Erfindung ein Computer-Netzwerk, ein Computerprogramm sowie einen elektronisch lesbaren Datenträger.

Systeme und deren Informationstechnik weisen beispielsweise Betriebssysteme beziehungsweise Betriebssystemkerne auf. Auf diesen können Komponenten betrieben werden. Diese wiederum können Logeinträge erzeugen, die üblicherweise mit Hilfe dezidierter Protokolle, wie zum Beispiel dem Syslog-Protokoll, erfasst und ausgewertet werden können. "Syslog" ist ein Standard zur Übermittlung von Log-Meldungen in einem IP-Rechennetz.

Um Angriffe besser erkennen zu können, können Log-Nachrichten beziehungsweise Logdateien beziehungsweise Protokolldateien, die durch innerhalb einer IT-Infrastruktur betriebene Komponenten erzeugt werden, an eine zentrale Senke ausgeleitet werden (gegebenenfalls über mehrere Relais hinweg). Dort werden üblicherweise die Log-Nachrichten zur Erkennung von Anomalien an der Senke gespeichert und zum Beispiel mit Hilfe eines "Security and Information and Event Management Systems (SIEM-System)" analysiert. Beispiele für Lösungen sind etwa "SPLUNK" oder "OSSEC/WAZUH". Mit Hilfe des SIEM-Systems können die Log-Nachrichten mehrerer Komponenten miteinander korreliert werden, so dass bei Analyse der Logs im Vergleich zu einer isolierten Betrachtung einer Komponente (auch durch den Einsatz von KI-Funktionalitäten) Angriffe besser und zielgenauer erkannt werden können und hierdurch Alarmierungen ausgelöst werden können. Zudem können durch komponentenübergreifende Korrelationen nach einem erfolgten Angriff genauere forensische Analysen durchgeführt werden und im Nachhinein der Angriff besser rekonstruiert werden. Wie die Daten miteinander zu korrelieren sind, wird entweder durch den Betreiber des SIEM-Systems händisch konfiguriert und/oder durch die im SIEM-System hinterlegte Applikationslogik und der damit verbundenen automatischen Datenanalyse definiert.

Für eine gute Angriffserkennung müssen von den Komponenten umfangreiche Daten über das Verhalten der darauf betriebenen Applikationen (zum Beispiel mit Hilfe von Audit oder durch die Komponente selbst) erzeugt und ausgeleitet werden. Bei vollumfänglicher Logerzeugung kann auf einer Komponente ein Log-Volumen von mehreren Gigabyte pro Tag erzeugt werden.

Fällt die Log-Senke aus oder ist diese zum Beispiel aufgrund von Netzwerkproblemen temporär nicht erreichbar, kann eine Komponente die Log-Daten nicht übertragen und muss die erzeugten Daten lokal in hierfür vorhandenen Warteschlagen zwischenspeichern (im Arbeitsspeicher und/oder auf der Festplatte). Wird die Kapazität der Warteschlangen erreicht, bevor die Log-Senke wieder erreichbar ist, müssen Log-Nachrichten gemäß einer Richtlinie verworfen werden, wodurch Angriffe weder zur Laufzeit noch im Nachhinein auf verlässliche Weise erkannt werden können.

Des Weiteren besteht ein Problem, wenn aufgrund der Dauer der erzeugten Log-Datenmenge diese nur als konstanter Datenstrom ausgeleitet werden kann und nach einem Ausfall der Senke diese Daten nicht mehr (in angemessener Zeit) nachträglich übertragen werden können. Im Besonderen ist dies der Fall, wenn die bereitgestellte Netzwerkkapazität nicht groß genug ist, um sicherzustellen, dass die Verfügbarkeit der eigentlichen Funktionalität der Komponente nicht beeinträchtigt wird. Beispielsweise ist der Fall bei Systemen, die zum Beispiel mit geringer Bandbreite über ein drahtloses Netzwerk angebunden sind und nicht über die dedizierten Log-Netzwerke zum Ausleiten der Nachrichten verfügen.

Unter einem SIEM-System bezeichnet man einzelne Security-Management-Systeme, die volle Sicherheit und Transparenz zu Aktivitäten innerhalb eines Netzwerks bieten. Dies versetzt es in die Lage, in Echtzeit auf Bedrohungen zu reagieren. Es sammelt, analysiert und kategorisiert Maschinendaten aus einer Vielzahl von Quellen. Dann analysiert es die Daten, um Erkenntnisse bereitzustellen, damit sie entsprechend agieren können.

Dabei kann ein großes Datenvolumen in Sekundenschnelle erfasst und durchsucht werden, um ungewöhnliches Verhalten aufzuspüren und zu melden, wodurch die Echtzeit Einblicke zum Schutz erhalten werden können. Mit Hilfe von SIEM-Systemen kann zu jedem zum Zeitpunkt eine Momentaufnahme einer IT-Infrastruktur durchgeführt werden.

Beispielsweise ist von Syslog-Implementierungen, wie beispielsweise Rsyslog, bekannt, dass Log-Daten in Warteschlangen geschrieben werden können. Diese können auf der Komponente mit einer definierten Größe versehen werden. Es gibt hierbei unterschiedliche Arten von Warteschlangen:
- "memory queues": Die Warteschlange wird ausschließlich im Hauptspeicher vorgehalten. Hierdurch werden erzeugte Logdaten nicht persistiert, gleichzeitig kann eine solche Warteschlange nicht beliebig groß gewählt werden, da anderenfalls die eigentliche Funktionalität der Komponente aufgrund in Ermangelung von Hauptspeicher nicht erbracht werden kann.
- "disc queues": Die Warteschlange wird auf die Festplatte geschrieben. Gerade bei der Verwendung von SSDs in Kombination mit einem hohen Log-Volumen besteht hierbei das Risiko, dass durch eine sehr ohne Anzahl von durch Logdaten erzeugten Schreibzyklen die Lebensdauer einer lokalen Platte signifikant minimiert wird. Die Daten sind im Gegensatz zur In-memory-Variante persistiert.
- "disc-assisted queues" (eine Kombination aus "in-memory- und "disc- queues"): Im Normalfall (also bei Erreichbarkeit der Log-Senke) werden keine noch nicht weitergeleiteten Log-Daten auf die Festplatte geschrieben. Lediglich bei Stausituationen, Nicht-Erreichbarkeit der Senke oder Neustart der Komponente werden die in der Warteschlange befindlichen Daten auf die Platte geschrieben. Hierbei ist es auch möglich, dass man die Warteschlange bei sehr niedrigem In-Memory-Teil so groß definiert, dass diese Log-Daten für einen längeren Zeitraum (zum Beispiel zwei Tage) vorhalten kann. Andere Syslog-Implementierungen, wie "Syslog-ng" oder "NXLog" bieten vergleichbare Warteschlangenkonzepte.

Wird die Kapazität einer Warteschlange überschritten, wird durch eine Richtlinie definiert, wie Log-Nachrichten verworfen werden sollen. Standard-Verhalten ist hierbei das FIFO-Prinzip, sprich: die ältesten, noch nicht übertragenen Log-Daten werden verworfen. Alternativ besteht bei Implementierungen, wie "RSYS-Log" auch die Möglichkeit, dass Logeinträge bestimmter Kategorien verworfen werden. Hierdurch gibt es beim Syslog-Protokoll die sogenannte Facilites (wie zum Beispiel MAIL, KERN, LOCAL1, AUTH), mit denen Applikationskategorien definiert werden können, die Kritikalität des Eintrags (severity - zum Beispiel "info", "warn", "crit", "emergency") Die Kritikalität ist hierbei gewichtet; sprich, es kann hierbei zum Beispiel definiert werden, dass Log-Nachrichten der Kategorie "weniger kritisch" verworfen werden sollen. Eine Kombination von Kategorien und Facility-System ist ebenfalls möglich.

Bei "Syslog-ng" gibt es die Möglichkeit, Syslog-Daten permanent zu korrigieren. Hierbei werden innerhalb einer definierten Zeitspanne mehrere Log-Nachrichten auf einer lokalen Syslog-Distanz erwartet. Diese Nachrichten können von unterschiedlichen Applikationen der Komponenten stammen und können zu einer Nachricht korrigiert und anschließend ausgeleitet werden.

Neben einer Ausleitung zu einer zentralen Log-Senke, zum Beispiel einem SIEM-System, wie Splunk, welches die Korrelation über mehrere Systeme hinweg durchführt, besteht auch die Möglichkeit, dass ein SIEM-System lokal auf dem System Log-Daten analysiert. Eine bekannte Implementierung ist hierfür "OSSEC" beziehungsweise "WAZUH". Auf den zu überwachenden Komponenten wird hierfür eine Richtlinie hinterlegt, die lokal auf den Systemen über einen Agenten interpretiert wird und somit eine Aktivität auf dem System überwacht. Eine Korrelation von Log-Daten kann somit nur lokal erfolgen. Wird eine Abweichung vom erwarteten Verhalten festgestellt, erfolgt eine Alarmierung an ein zentrales Alarmierungssystem. Alarme unterschiedlicher Systeme können nur dann miteinander korreliert werden, sofern die Angriffsszenarien im Voraus feststehen. Auch bei dieser SIEM-Lösung ist es möglich, dass Nachrichten bei Nicht-Erreichbarkeit der Senke lokal für einen definierten Zeitraum zwischengespeichert werden.

Der Vorteil einer SIEM-Lösung wie Splunk ist jedoch, dass Log-Daten sämtlicher Systeme über einen längeren Zeitraum (zum Beispiel fünf Monate) vorgehalten werden und über eine Korrelation im Nachhinein forensische Analysen durchgeführt werden können.

Somit besteht eine Aufgabe der vorliegenden Erfindung besteht darin, Log-Nachrichten einer Recheneinheit lokal aufzubereiten, so dass es insbesondere zu keinem Informationsverlust kommt.

Diese Aufgabe wird durch ein Verfahren, ein Computernetzwerk-System, ein Computerprogramm sowie einen elektronisch lesbaren Datenträger gemäß den unabhängigen Patentansprüchen gelöst. Sinnvolle Weiterbildungen ergeben sich aus den abhängigen Patentansprüchen.

Ein Aspekt der Erfindung betrifft ein Verfahren zum Aufbereiten von Log-Nachrichten in einem Computernetzwerk-System, wobei
- die Log-Nachrichten von einer Recheneinheit des Computernetzwerk-Systems generiert werden,
- die generierten Log-Nachrichten von der Recheneinheit zur Übertragung an eine Log-Nachrichten -Speichereinheit des Computernetzwerk-Systems bereitgestellt werden,
- die Recheneinheit überprüft, ob die bereitgestellten Log-Nachrichten unter einer vorgegebenen Bedingung an die Log-Nachrichten -Speichereinheit übertragen werden können, und
- falls nicht: die bereitgestellten Log-Nachrichten in Abhängigkeit von einer Korrelationsbedingung miteinander zu einer Kombinations-Lognachricht zusammengefasst werden, und
- die Kombinations-Lognachricht an die Log-Nachrichten - Speichereinheit übertragen wird.

Insbesondere handelt es sich bei dem vorgeschlagenen Verfahren um ein computerimplementiertes Verfahren. Insbesondere kann es sich bei dem erfindungsgemäßen um eine Cloud-basierte Anwendung handeln.

Durch das vorgeschlagene Verfahren können Log-Nachrichten einer Recheneinheit lokal aufbereitet werden. Dies kann insbesondere automatisch und auf intelligente Art und Weise erfolgen, so dass speziell eine dynamische Aufbereitung lokal auf einer Recheneinheit erfolgen kann. Folglich können die Log-Nachrichten besser und effizienter aufbereitet werden. Dies erfolgt insbesondere dann, wenn die vorgegebene Bedingung nicht erfüllt ist.

Insbesondere greifen das vorgeschlagene Verfahren und insbesondere die vorliegende Erfindung auf das bereits eingangs Erwähnte auf und lösen dabei die darin vorhandenen Nachteile.

Beispielsweise können durch das Computernetzwerk-System oder die Log-Nachrichten -Speichereinheit zumindest die vorgegebene Bedingung oder weitere vorgegebene Bedingungen vorgegeben werden. Mithin der vorgegebenen Bedingung kann die Recheneinheit selbständig, insbesondere automatisch, überprüfen, ob die Log-Nachrichten übertragen werden können. Sollte dies nicht der Fall sein, so können automatisch durch die Recheneinheit unter Berücksichtigung der vorgegebenen Korrelationsbedingung die Log-Nachrichten zu zumindest einer Kombinations-Lognachricht zusammengefügt beziehungsweise zusammengefasst werden. Die Kombinations-Lognachricht kann wiederum, falls die vorgegebene Bedingung erfüllt ist, an den Log-Nachrichten -Speicher übertragen werden.

Insbesondere kann in Abhängigkeit von der Korrelationsbedingung und/oder von weiteren Korrelationsbedingungen festgelegt beziehungsweise entschieden werden, wie viele der gespeicherten Log-Nachrichten zu einer oder mehreren Kombinations-Log-Nachrichten zusammengefasst werden. Beispielsweise kann eine jeweilige Menge an gespeicherten Log-Nachrichten zu einer von mehreren Kombinations-Lognachrichten gespeichert werden. Wiederum kann zu einem späteren Zeitpunkt, bei dem die vorgegebene Bedingung immer noch nicht erfüllt ist, mehrere der Kombinations-Lognachrichten zu einer erneuten Kombinations-Lognachricht unter Berücksichtigung der Korrelationsbedingung zusammengefasst werden. Somit kann die Recheneinheit auf intelligente Art und Weise selbständig die Log-Nachrichten aufbereiten beziehungsweise verwalten.

Das Computernetzwerk-System kann beispielsweise als Rechnernetz, Computernetz oder Computernetzwerk bezeichnet werden. Beispielsweise kann das Computernetzwerk-System einen Zentralrechner oder Hauptrechner aufweisen. Ein solcher Zentralrechner kann den angeschlossenen Rechnern (Arbeitsplatzrechner oder Terminals) die darauf betriebenen Programme, Dienste, Systemprogramme oder Anwendungsprogramme zur Verfügung stellen. Bei der Log-Nachrichten -Speichereinheit kann es sich beispielsweise um eine zentrale oder dezentrale Speichereinheit beziehungsweise einen Speicher des Computernetzwerk-Systems handeln. Mit diesen können alle Recheneinheiten und/oder Komponenten ihre jeweiligen Log-Nachrichten übermittelt und speichern. Bei der Log-Nachrichten -Speichereinheit kann es sich beispielsweise um eine Log-Senke des Computernetzwerk-Systems handeln. Die Log-Nachrichten - Speichereinheit kann beispielsweise eine Servereinheit oder ein Gerät oder eine Datenwolke sein. Die Lognachrichten-Speichereinheit kann beispielsweise die Log-Nachrichten speichern, weiterleiten und/oder verarbeiten.

Beispielsweise ergeben sich durch das vorgeschlagene Verfahren folgende Vorteile. Die Log-Nachrichten beziehungsweise Log-Daten können insbesondere bei Nicht-Verfügbarkeit der Log-Senke (Log-Nachrichten -Speichereinheit) lokal auf der Recheneinheit aufbereitet beziehungsweise korreliert werden. Das Zusammenfassen der Log-Nachrichten kann beispielsweise im Gegensatz zu den bekannten Lösungen die Log-Nachrichten mit Hilfe von FIFO oder aufgrund der Facilities oder Kritikalität verwerfen (wie eingangs erwähnt) und dynamisch in Abhängigkeit von der auf der Recheneinheit hinterlegten Regel (Korrelationsbedingung) automatisch aufbereiten.

Mit dem vorgeschlagenen Verfahren kann eine Verringerung des lokalen Log-Volumens auf der Recheneinheit verringert werden, und trotzdem kann mit Hilfe der lokalen Zusammenfassung der Log-Nachrichten kritische, zusammenhängende Ergebnisse erfasst und bis zu einer Wiederverfügbarkeit (wenn die vorliegende Bedingung erfüllt ist) der Log-Senke zwischengespeichert und anschließend wieder übertragen werden. Wenn beispielsweise als vorgegebene Bedingung die Log-Nachrichten - Speichereinheit wieder verfügbar ist, können die lokal erkannten Anomalien, welche durch die Log-Nachrichten und insbesondere die Kombinations-Log-Nachrichten charakterisiert werden, übertragen werden. Durch das Zusammenfassen der Log-Nachrichten in der beispielsweise gesamten Warteschlange kann auch die benötigte Bandbreite der übertragenen Log-Nachrichten reduziert werden, wenn die Log-Senke wieder verfügbar ist. Bei Verfügbarkeit der Log-Senke (ist also beispielsweise die vorgegebene Bedingung erfüllt) können, wie eingangs erwähnt, vollumfänglich Log-Nachrichten beziehungsweise Log-Daten an ein SIEM-System übertragen werden.

Insbesondere kann durch das vorgeschlagene Verfahren eine Lösung bereitgestellt werden, bei welcher bei temporärer Nicht-Erreichbarkeit der Log-Senke über einen längeren Zeitraum der qualitative Datenverlust minimiert werden kann. Bei Wiedererreichbarkeit (also die vorgegebene Bedingung ist erfüllt) der Log-Senke können durch das vorgeschlagene Verfahren Daten geringeren Volumens übertragen werden (entspricht der Kombinations-Lognachricht), welche ebenfalls eine nachträgliche forensische Analyse beziehungsweise Angriffserkennung ähnlicher Qualität (zum Beispiel über ein SIEM-System) ermöglicht.

Insbesondere erfolgt die Zusammenfassung der Log-Nachrichten zu der Kombinations-Lognachricht lokal mittels einer Datenvorverarbeitung auf der Recheneinheit.

Beispielsweise kann es sich bei der vorgegebenen Bedingung um die Erreichbarkeit der Lognachrichten-Speichereinheit oder beispielsweise um eine Speicherkapazität dieser Lognachrichten-Speichereinheit handeln.

Besonders vorteilhaft ist durch das vorgeschlagene Verfahren, dass die Log-Nachrichten auch dann, wenn die Bedingung nicht erfüllt ist, ohne Datenverlust (hinsichtlich der Datenqualität) gespeichert werden können. Des Weiteren ergibt sich der Vorteil, dass es zu keiner Übertragungsüberlastung innerhalb des Computernetzwerk-Systems kommen kann.

Beispielsweise kann mit einer Lognachricht ein, insbesondere aktuelles, Systemverhalten, das das automatisch geführte Protokoll aller oder bestimmter Aktionen von Prozessen auf der Recheneinheit enthält beziehungsweise enthalten, bereitgestellt werden. Log-Nachrichten dokumentieren beispielsweise das Systemverhalten, wie beispielsweise Systemaufrufe, Datenzugriffe, Netzwerkpakete, Kommunikationsprotokolle, Nutzer-Logins, fehlgeschlagene Aufrufe, aktive Netzwerkverbindungen, Input-werteexterner Sensoren und Aktoren und noch Vieles mehr. Log-Nachrichten können mit Hilfe einer Log-Nachrichten-Analyse analysiert werden. Dies kann beispielsweise zu einem späteren Zeitpunkt erfolgen. Somit können beispielsweise Fehlerfälle beziehungsweise Fehler der Recheneinheit analysiert und erkannt werden.

In einem Ausführungsbeispiel der Erfindung ist vorgesehen, dass die bereitgestellten Log-Nachrichten automatisch an die Lognachrichten-Speichereinheit übertragen werden, wenn eine Datenverbindung zur Übertragung von Daten zwischen der Recheneinheit und der Lognachrichten-Speichereinheit vorliegt. Somit kann als eine mögliche vorgegebene Bedingung das Vorhandensein beziehungsweise Vorliegen der Datenverbindung sein. Somit kann systemseitig bei der Feststellung, dass zunächst keine Datenverbindung vorliegt, eine Übertragung der Log-Nachrichten an die Speichereinheit unterbunden beziehungsweise unterbrochen werden. Sobald nun diese Datenverbindung wieder vorliegt beziehungsweise funktionsfähig ist, können die bereitgestellten Log-Nachrichten an die Lognachrichten-Speichereinheit übertragen werden. Besonders vorteilhaft ist dabei, wenn anstelle der Log-Nachrichten die Kombinations-Lognachricht oder mehrere Kombinations-Lognachrichten übertragen werden. Unter einer Datenverbindung ist insbesondere ein Datenlink beziehungsweise eine Kommunikationsverbindung zwischen der Recheneinheit und der Lognachrichten-Speichereinheit zu verstehen.

In einem Ausführungsbeispiel ist vorgesehen, wenn festgestellt wird, dass zwischen der Recheneinheit und der Lognachrichten-Speichereinheit keine Datenverbindung vorliegt oder die Datenverbindung beeinträchtigt ist, die Log-Nachrichten automatisch zu der Kombinations-Lognachricht zusammengefasst werden. Somit wird hier, insbesondere systemseitig und automatisch, festgestellt, wenn als nicht-erfüllte Bedingung keine Datenverbindung vorliegt. Des Weiteren kann hier beispielsweise der Fall auftreten, dass es bei der Datenverbindung einen Datenstau beziehungsweise Verbindungsstau gibt. In diesem Fall kann zur Entgegenwirkung die Kombinations-Lognachricht generiert werden. Beispielsweise ist es ebenso denkbar, dass festgestellt wird, dass die Datenverbindung unzureichend, also zu langsam ist. In diesem Fall kann auch auf das Übertragen der Log-Nachrichten verzichtet werden und diese zunächst zwischengespeichert und zu der Kombinations-Lognachricht zusammengefasst werden. Somit kann die langsame oder beeinträchtigte Datenverbindung nicht noch mehr strapaziert werden.

In einem Ausführungsbeispiel ist des Weiteren vorgesehen, dass eine Zeitdauer, wie lange keine Datenverbindung vorliegt oder wie lange die Datenverbindung beeinträchtigt ist, bestimmt wird, wobei die bestimmte Zeitdauer bei dem Zusammenfassen der Log-Nachrichten berücksichtigt wird. Zusätzlich oder anstatt kann die bestimmte Zeitdauer die Korrelationsbedingung beeinflussen. Somit kann auf intelligente Art und Weise und an die jeweilige Situation angepasst festgestellt werden, ob tatsächlich ein Zusammenfassen der Log-Nachrichten vonnöten ist und/oder in welchem Umfang dies nun durchgeführt werden sollte. Durch die Bestimmung der Zeitdauer kann beispielsweise festgestellt werden, dass nur eine kurzzeitige, insbesondere nur eine in einem Bereich zwischen Millisekunden liegende Beeinträchtigung der Datenverbindung oder keine Datenverbindung vorgelegen hat, so dass nicht gleich die Übertragung der Log-Nachrichten unterbunden wird. Beispielsweise kann hierzu, sobald die Zeitdauer einen vorgegebenen Schwellwert beziehungsweise eine Zeitschwelle erreicht, mit der Zusammenfassung der Log-Nachrichten begonnen werden. Somit kann verhindert werden, dass bei einer kurzzeitigen Unterbrechung der Datenverbindung die Übertragung der Log-Nachrichten beendet wird. Die bestimmte Zeitdauer und insbesondere die vorgegebene Schwelle kann beispielsweise bei der Korrelationsbedingung mitberücksichtigt werden. Somit kann bei der Zusammenfassung der Log-Nachrichten bereits durch die Korrelationsbedingung die Zeitdauer mitüberprüft und mitberücksichtigt werden.

Des Weiteren ist die Zeitdauer dann von Bedeutung, wenn eine gewisse, insbesondere lange Zeit keine Datenverbindung vorliegt oder diese beeinträchtigt ist. Dies ist dann von Bedeutung, da ab einer gewissen Zeit eine Speicherkapazität beziehungsweise ein Speicherplatz innerhalb der Recheneinheit, wo die Log-Nachrichten zwischengespeichert werden, erschöpft sein kann. Hierzu kann bei Erreichen einer kritischen Zeitdauer eine weitere Funktion zur Kombination von Log-Nachrichten beziehungsweise in dieser Situation zur Kombination von bereits vorhandenen Kombinations-Lognachrichten durchgeführt werden. Des Weiteren können hier Fehlermeldungen und/oder Fehlerstrategien ausgegeben beziehungsweise durchgeführt werden.

In einem weiteren Ausführungsbeispiel ist vorgesehen, dass die Kombinations-Lognachricht automatisch an die Log-Nachrichten-Speichereinheit unmittelbar dann übertragen wird, wenn durch die Recheneinheit festgestellt wird, dass eine Datenverbindung zwischen der Recheneinheit und der Lognachrichten-Speichereinheit wieder vorliegt. Somit kann bei einer Feststellung, dass die Bedingung wieder erfüllt ist (hier das Vorliegen einer wieder funktionierenden Datenverbindung), die Kombinations-Lognachricht an die Lognachrichten-Speichereinheit übertragen werden. Somit kann der interne Speicher der Recheneinheit, in dem Log-Nachrichten und Kombinations-Lognachrichten gespeichert werden, wieder entleert werden. Beispielsweise kann das automatische Übermitteln der Kombinations-Lognachricht unverzüglich bei Feststellung, dass die vorliegende Bedingung wieder erfüllt ist, durchgeführt werden.

Des Weiteren kann das automatische Übertragen der Kombinations-Lognachricht dann erfolgen, wenn die Datenverbindung eine gewisse Zeit (zum Beispiel einige Sekunden) stabil steht beziehungsweise vorliegt. Beispielsweise kann das Übertragen der Kombinations-Lognachricht dann erfolgen, wenn eine stabile und nicht beeinträchtigte Datenverbindung vorliegt.

In einem Ausführungsbeispiel ist des Weiteren vorgesehen, dass die Kombinations-Lognachricht in einem lokalen Zwischenspeicher der Recheneinheit abgelegt wird, solange die vorgegebene Bedingung nicht erfüllt ist und falls die vorgegebene Bedingung erfüllt ist, die Kombinations-Lognachricht unmittelbar automatisch an die Lognachrichten-Speichereinheit übertragen wird. Somit kann die Recheneinheit selbständig die Log-Nachricht und insbesondere die Kombinations-Lognachricht verwalten beziehungsweise aufbereiten. Hierzu kann die Recheneinheit einen internen beziehungsweise lokalen Zwischenspeicher aufweisen. Dieser kann unter anderem dann verwendet werden, wenn keine Datenverbindung zu den Log-Nachrichten über die Speichereinheit vorliegt beziehungsweise die Bedingung nicht erfüllt ist. Sobald wiederum die vorgegebene Bedingung erfüllt ist, kann der Zwischenspeicher entleert und die darin gespeicherten Log-Nachrichten und/oder Kombinations-Lognachrichten an die Lognachrichten-Speichereinheit übertragen werden.

In einem weiteren Ausführungsbeispiel ist vorgesehen, dass mit der Korrelationsbedingung festgelegt wird, welche Art oder welcher Typ von Log-Nachrichten oder welche Menge an Log-Nachrichten zu der Kombinations-Lognachricht zusammengefasst werden können. Insbesondere kann die Korrelationsbedingung durch das Computernetzwerk-System oder eine Auswerteeinheit bestimmt und der Recheneinheit übermittelt beziehungsweise bereitgestellt werden. Somit kann beispielsweise systemseitig durch das Computernetzwerk-System oder durch anderweitige Systeme beziehungsweise Einheiten die zu verwendende Korrelationsbedingung definiert und festgestellt werden. Darin können spezielle Parameter beziehungsweise Eigenschaften vorgegeben werden. Somit können beispielsweise die Log-Nachrichten zusammengefasst werden, welche eine gleiche Art beziehungsweise Informationsart aufweisen. Ebenfalls können Log-Nachrichten des gleichen Typs zusammengefasst werden. Ebenfalls kann festgelegt werden, ab wie vielen Log-Nachrichten diese jeweils zu einer Kombinations-Lognachricht zusammengefasst werden. Somit können auf intelligente Art und Weise, insbesondere auf dynamische Art und Weise, die Log-Nachrichten zu zumindest einer Kombinations-Lognachricht zusammengefasst werden.

Insbesondere kann es sich bei der Korrelationsbedingung um eine festgestellte Regel beziehungsweise um ein Regelwerk handeln.

In einem Ausführungsbeispiel ist des Weiteren vorgesehen, dass eine Log-Nachrichten-Generierungsrate, mit welcher eine Anzahl an generierten Log-Nachrichten pro Zeiteinheit durch die Recheneinheit charakterisiert wird, bestimmt und bei dem Zusammenfassen der Log-Nachrichten berücksichtigt wird. Dies hat den Vorteil, dass vor allem bei einer sehr hohen Lognachrichten-Generierungsrate und bei gleichzeitigem Nicht-Erfülltsein der Bedingung eine ausreichende Anzahl an Log-Nachrichten zusammengefasst werden. Insbesondere ist die Generierungsrate dann von Bedeutung, wenn eine sehr hohe Anzahl an Log-Nachrichten pro Zeiteinheit, beispielsweise pro Sekunde, erzeugt werden. Hierbei muss schnell reagiert werden und so schnell wie möglich eine vorgegebene Anzahl an Log-Nachrichten zusammengefasst werden. Durch die Berücksichtigung der Log-Nachrichten beziehungsweise Generierungsrate kann auch eine Überlastung der Speichereinheit der Recheneinheit und insbesondere der Recheneinheit im Allgemeinen verhindert werden. Sollte wiederum der Fall vorliegen, dass die Generierungsrate sehr gering ist, so wäre es beispielsweise ausreichend, zunächst abzuwarten, bis eine vorgegebene Anzahl an Log-Nachrichten vorhanden sind, um diese zusammenzufassen.

In einem Ausführungsbeispiel ist des Weiteren vorgesehen, dass die generierten Log-Nachrichten der Recheneinheit in einem lokalen Zwischenspeicher der Recheneinheit für das Übertragung an die Lognachrichten-Speichereinheit zwischengespeichert werden, wobei die Log-Nachrichten dabei in einer vorgegebenen Übertragungsreihenfolge für das Übertragen zwischengespeicherten werden. Somit kann bereits im Vorfeld festgelegt werden, wie das Übertragen auszusehen hat, sobald die Bedingung wieder erfüllt ist. Somit kann hier wiederum beispielsweise die Recheneinheit selbst die Aufbereitung und somit das Verwalten der gespeicherten Log-Nachrichten übernehmen. Beispielsweise handelt es sich bei der Übertragungsreihenfolge um eine Warteschlange, also um die noch zu versendenden beziehungsweise noch nicht versendeten Log-Nachrichten. Somit können diese für das spätere Übertragen zwischengespeichert werden. Bei dem Zwischenspeichern kann es sich um einen Datenspeicher handeln.

Dabei kann beispielsweise bei der vorgegebenen Übertragungsreihenfolge das Prinzip "first in - first out (FIFO)" verwendet werden. Also die Log-Nachrichten, welche zuerst zwischengespeichert wurden, werden anschließend als erstes wieder übertragen. Ebenso kann die zeitliche Erfassung beziehungsweise zeitliche Generierung der Log-Nachrichten berücksichtigt werden.

In einem Ausführungsbeispiel ist des Weiteren vorgesehen, dass eine aktuelle Auslastung des lokalen Zwischenspeichers überprüft wird, wobei wenn die Auslastung einen vorgegebenen Schwellwert überschreitet, die zwischengespeicherten Log-Nachrichten in Abhängigkeit von der Korrelationsbedingung zumindest anteilig miteinander zu einer Kombinations-Lognachricht zusammengefasst werden.

Somit kann verhindert werden, dass der lokale Zwischenspeichert der Recheneinheit datentechnisch überläuft und somit Daten verlorengehen würden. Insbesondere kann somit die Auslastung des Zwischenspeichers und somit auch der Recheneinheit reduziert werden. Somit kommt es zu keinen kritischen Zuständen des Zwischenspeichers und somit auch nicht der Recheneinheit.

Beispielsweise kann der vorgegebene Schwellwert durch die Recheneinheit oder beispielsweise durch das Computernetzwerk-System vorgegeben werden. Bei dem Erreichen des vorgegebenen Schwellwerts kann beispielsweise eine vorgegebene Anzahl an Log-Nachrichten kombiniert zusammengefasst werden oder einzelne Log-Nachrichten werden entsprechend ihres Typs beziehungsweise Charakters anteilig zusammengefasst. Insbesondere erfolgt die Überwachung beziehungsweise Überprüfung der Auslastung beziehungsweise eines Füllgrads des Zwischenspeichers permanent beziehungsweise kontinuierlich.

In einem weiteren Ausführungsbeispiel ist vorgesehen, dass in Abhängigkeit von der Auslastung des Zwischenspeichers Log-Nachrichten, welche einen jeweiligen Zeitstempel aufweisen oder innerhalb eines vorgebaren Zeitintervalls generiert wurden, miteinander zu einer Kombinations-Lognachricht zusammengefügt werden. Somit können beispielsweise nur aktuelle oder ältere Log-Nachrichten zusammengefasst werden. Sollte beispielsweise die Auslastung des Zwischenspeichers einen kritischen Wert beziehungsweise Bereich erreichen, so können beispielsweise zunächst alle alten Log-Nachrichten zusammengefasst werden und die aktuellen als neue alte zwischengespeichert, und somit kann auf intelligente Art und Weise der Zwischenspeichert entlastet werden.

In einem Ausführungsbeispiel ist des Weiteren vorgesehen, dass durch weitere Recheneinheiten des Computernetzwerk-Systems weitere Log-Nachrichten generiert werden, wobei die Log-Nachrichten der Recheneinheit und die Log-Nachrichten der weiteren Recheneinheiten in Abhängigkeit von ihrem Nachrichteninhalt zu einer Kombinations-Lognachricht zusammengefasst werden. Somit können insbesondere für die spätere beispielsweise forensische Analyse der Log-Nachrichten die Log-Nachrichten entsprechend ihres Nachrichteninhalts beziehungsweise Informationsgehalts zusammengefasst werden. Beispielsweise können Log-Nachrichten, welche einen fehlgeschlagenen Login-Vorgang charakterisieren, zusammengefasst werden. Somit kann hier bereits eine Vorabselektion durchgeführt werden, so dass passende beziehungsweise kompatible Log-Nachrichten zusammengefasst werden. Dies ermöglicht insbesondere eine noch bessere und effizientere Aufbereitung von Log-Nachrichten.

Ein weiterer Aspekt der Erfindung betrifft ein Computernetzwerk-System mit,
- einer Lognachrichten-Speichereinheit,
- zumindest einer Recheneinheit zum Generieren von Log-Nachrichten,
- einem lokalen Zwischenspeicher der zumindest einen Recheneinheit zum Bereitstellen der generierten Log-Nachrichten von der zumindest einen Recheneinheit
- einer Schnittstelle der zumindest einen Recheneinheit zum Übertragung der Log-Nachrichten an die Lognachrichten-Speichereinheit, und
- einer Auswerteeinheit der zumindest einen Recheneinheit zum Überprüfen, ob die Log-Nachrichten unter einer vorgegebenen Bedingung an die Lognachrichten-Speichereinheit übertragen werden können, wobei
- die Auswerteeinheit ausgebildet ist, die Log-Nachrichten in Abhängigkeit von einer Korrelationsbedingung miteinander zu einer Kombinations-Lognachricht zusammenzufassen, falls die Log-Nachrichten nicht an die Lognachrichten-Speichereinheit übertragen werden können, und
- die Schnittstelle ausgebildet ist, die Kombinations-Lognachricht an die Lognachrichten-Speichereinheit zu übertragen.

Das Computernetzwerk-System ist ausgebildet, um ein Verfahren nach einem der vorhergehenden Aspekte oder einer vorteilhaften Ausführung zumindest einer der genannten Aspekte auszuführen.

Insbesondere wird ein Verfahren gemäß den vorher genannten Aspekten oder einer vorteilhaften Weiterbildung aus einem dieser Aspekte durchgeführt beziehungsweise ausgeführt.

Bei dem Computernetzwerk-System kann es sich um ein Rechennetz, Computernetz oder Computernetzwerk handeln. Beispielsweise kann es sich bei dem Computernetzwerk-System um ein industrielles System, wie eine Verarbeitungsstraße, Verarbeitungsprozess, Fließbandfertigungsanlage, Herstellungsvorrichtungen oder um ein Firmennetzwerk handeln.

Insbesondere handelt es sich bei der Recheneinheit beispielsweise um einen lokalen, zentralen oder dezentralen Server. Insbesondere kann es sich bei der Recheneinheit um eine Cloud-basierte Einheit handeln.

Bei dem Computernetzwerk-System kann es sich ebenfalls um ein Cloud-basiertes System handeln. Beispielsweise kann es sich bei dem Computernetzwerk-System um eine Cloud-basierte Technologie handeln.

Ein weiterer Aspekt der Erfindung betrifft ein Computerprogramm, welches direkt in einen Speicher einer Steuereinrichtung eines Computernetzwerk-Systems nach dem vorherigen Aspekt ladbar ist, mit Programm-Mitteln, um das Verfahren nach einem der vorhergehenden Aspekte oder einer vorteilhaften Weiterbildung daraus auszuführen, wenn das Programm in einer Steuereinrichtung eines Computernetzwerk-Systems ausgeführt wird.

Ein weiterer Aspekt der Erfindung betrifft einen elektronisch lesbaren Datenträger mit darauf gespeicherten elektronisch lesbaren Steuerinformationen, welche derart ausgestaltet sind, dass sie bei Verwendung des Datenträgers in einer Steuereinrichtung eines Computernetzwerk-Systems nach einem der vorhergehenden Aspekte ein Verfahren nach einem der vorhergehenden Aspekte oder einer vorteilhaften Weiterbildung daraus durchführen.

Ausführungsbeispiele eines Aspekts sind als vorteilhafte Ausführungsbeispiele der anderen Aspekte und umgekehrt anzusehen.

Vorteilhafte Ausgestaltungsformen des Verfahrens sind als vorteilhafte Ausgestaltungsformen des Computernetzwerk-Systems, des Computerprogramms sowie des elektronisch lesbaren Datenträgers anzusehen. Das Computernetzwerk-System, das Computerprogramm und der elektronisch lesbare Datenträger weisen gegenständliche Merkmale auf, welche eine Durchführung des Verfahrens oder einer vorteilhaften Ausgestaltungsform davon ermöglichen.

Unter einer Recheneinheit kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere digitale Signalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Sofern nicht anders angegeben, können alle Schritte des, insbesondere computerimplementierten, Verfahrens von mindestens einer Recheneinheit durchgeführt werden, die auch als Datenverarbeitungsvorrichtung bezeichnet werden kann. Insbesondere kann die Datenverarbeitungsvorrichtung, die mindestens eine Verarbeitungsschaltung umfasst, die zur Durchführung eines erfindungsgemäßen, insbesondere computerimplementierten, Verfahrens ausgebildet oder angepasst ist, die Schritte des computerimplementierten Verfahrens durchführen. Hierzu kann in der Datenverarbeitungsvorrichtung insbesondere ein Computerprogramm gespeichert sein, das Anweisungen umfasst, die bei Ausführung durch die Datenverarbeitungsvorrichtung, insbesondere die mindestens eine Verarbeitungsschaltung, die Datenverarbeitungsvorrichtung veranlassen, das computerimplementierte Verfahren auszuführen.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind auch Ausführungen und Merkmalskombinationen als offenbart anzusehen, die nicht alle Merkmale eines ursprünglich formulierten unabhängigen Anspruchs aufweisen und/oder die über die in den Rückbezügen der Ansprüche dargelegten Merkmalskombinationen hinausgehen oder von denen abweichen.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

Die nachfolgenden Figuren zeigen in:
- FIG 1: eine schematische Darstellung eines Computernetzwerk-Systems; und
- FIG 2: einen schematischen Ablauf eines Ausführungsbeispiels des erfindungsgemäßen Verfahrens.

In den Figuren sind funktionsgleiche Elemente mit denselben Bezugszeichen versehen.

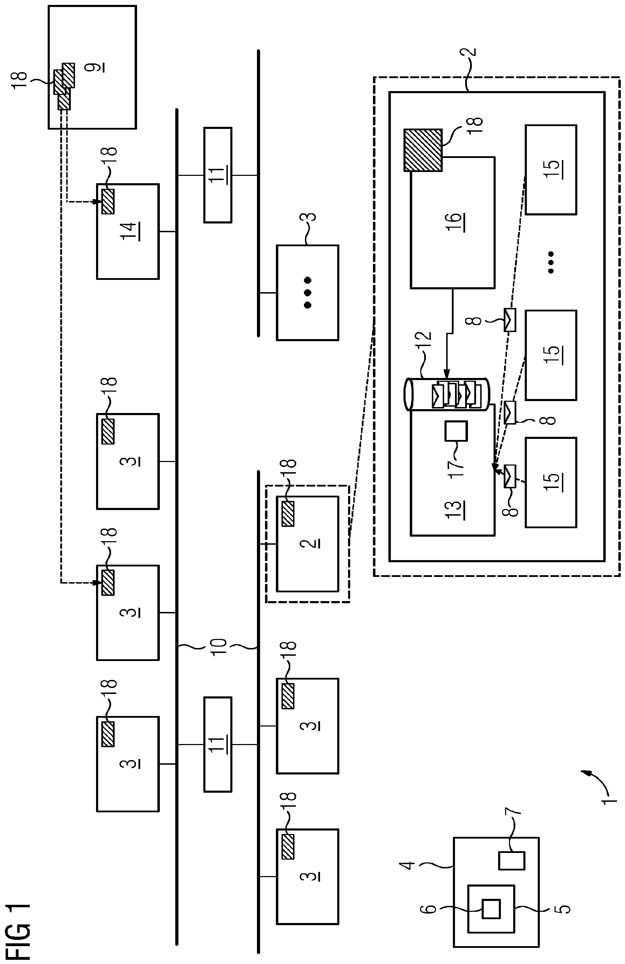

Die FIG 1 zeigt eine beispielhafte Ansicht eines Computernetzwerk-Systems 1. Das Computernetzwerk-System 1 kann beispielsweise ein Rechnernetz beziehungsweise ein Datenverarbeitungsnetz sein.

Das Computernetzwerk-System 1 kann beispielsweise eine Recheneinheit 2 aufweisen. Insbesondere kann das Computernetzwerk-System 1 weitere Recheneinheiten 3 aufweisen.

Des Weiteren kann das Computernetzwerk-System 1 eine Steuereinrichtung 4 aufweisen. Diese Steuereinrichtung 4 kann wiederum einen Speicher 5 aufweisen, auf welchem beispielsweise ein Computerprogramm 6 ladbar ist. Beispielsweise kann das Computerprogramm 6 Programm-Mittel aufweisen, um das erfindungsgemäße Verfahren oder eine Weiterbildung daraus auszuführen, wenn das Programm 10 in der Steuereinrichtung 4 des Computernetzwerk-Systems 1 ausgeführt wird. Des Weiteren kann ein elektronisch lesbarer Datenträger 7 vorgesehen sein, der gespeicherte elektronisch lesbare Steuerungsinformationen enthält, welche derart ausgestaltet sein, dass sie bei Verwendung des Datenträgers 7 in der Steuereinrichtung 4 des Computernetzwerk-Systems 1 optional das erfindungsgemäße Verfahren ausführt.

Beispielsweise kann das Computernetzwerk-System 1 für ein Automatisierungssystem zur Steuerung und Überwachung eines technischen Systems, wie zum Beispiel eine Maschinensteuerung oder ein verfahrenstechnischer Prozess, verwendet werden. In diesem Fall kann es sich bei den Recheneinheiten 2, 3 beispielsweise um Automatisierungskomponenten handeln, welche über Ein- und/oder Ausgabeschnittstellen, Sensoren und Aktoren verbunden sind. Beispielsweise kann des Weiteren das Computernetzwerk-System 1 aus einem Steuernetzwerk und einem Fabriknetzwerk, in dem die Daten aus den Steuernetzwerken erfasst werden, erfasst, verarbeitet und gegebenenfalls dargestellt werden.

Insbesondere kann das Computernetzwerk-System 1 in einem industriellen Umfeld verwendet werden. Bei den Recheneinheiten 2, 3 kann es sich insbesondere um Rechenkomponenten handeln. Insbesondere kann es sich bei den Recheneinheiten 2, 3 um speicherprogrammierbare Steuerungen, Feldgeräte, IoT-Gateways, On-Premises- oder Backend-Serversysteme, Edge-Systeme oder Edge-Cloud-Systeme handeln.

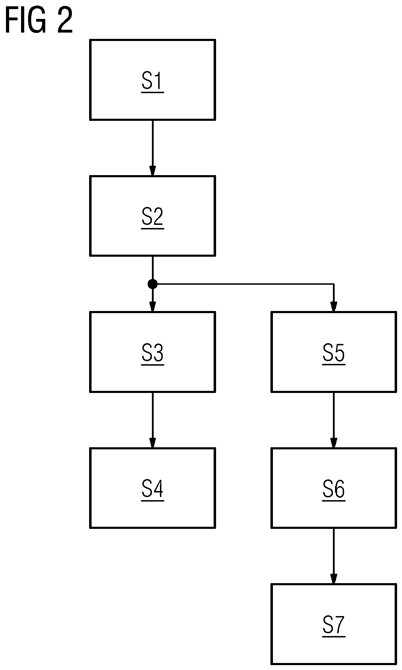

Durch die Recheneinheiten 2, 3 und insbesondere die Recheneinheit 2 können Log-Nachrichten 8 erzeugt beziehungsweise generiert werden. Dies kann beispielsweise in einem ersten Schritt S1 (vergleiche FIG 2) erfolgen. Bei den Log-Nachrichten 8 kann es sich beispielsweise um Syslog-Nachrichten handeln. Diese können wiederum weiteren Systemen, wie beispielsweise einem SIEM-System, weitergeleitet werden.

In einem optionalen zweiten Schritt S2 (vergleiche FIG 2) können die generierten Log-Nachrichten 8 zur Übertragung an eine Lognachrichten-Speichereinheit 9 bereitgestellt beziehungsweise vorbereitet werden.

Bei der Lognachrichten-Speichereinheit 9 kann es sich beispielsweise um eine zentrale Speichereinheit beziehungsweise einen zentralen Datenspeicher, insbesondere um eine Log-Senke beziehungsweise Logsenke handeln. In dieser Lognachrichten-Speichereinheit 9 können alle Log-Nachrichten 8 aller Recheneinheiten 2, 3 gespeichert werden. Hierzu können die Log-Nachrichten 8 über eine Datenverbindung 10 an die Lognachrichten-Speichereinheit 9 übertragen werden. Beispielsweise können über die Datenverbindung 10 die verschiedensten Recheneinheiten 2, 3 verbunden werden. Insbesondere können jeweilige Recheneinheiten 2, 3 in Teilnetzwerken angeordnet sein. Diese wiederum können über Gateways 11 miteinander verbunden werden.

Insbesondere können die Log-Nachrichten 8 in einen lokalen Zwischenspeicher 12 gespeichert werden. Über eine Schnittstelle 13 beziehungsweise eine Druckübertragungseinheit können die Log-Nachrichten 12 über die Datenverbindung 10 an die Lognachrichten-Speichereinheit 9 übertragen werden. Die endgültige Übertragung aller Log-Nachrichten 8 an die, insbesondere zentrale, Lognachrichten-Speichereinheit 9 kann beispielsweise mit Hilfe eines Log-Relais 14 erfolgen.

Beispielsweise können die Log-Nachrichten 8 in der Recheneinheit 2 durch die verschiedensten Applikationen 15 beziehungsweise Prozesse beziehungsweise Anwendungen generiert werden.

Insbesondere erfolgt im Normalzustand ein kontinuierliches Übertragen der Log-Nachrichten 8 an die Lognachrichten-Speichereinheit 9. Hierbei können jedoch Fehler beziehungsweise fehlerhafte Zustände auftreten. Diese gilt es frühzeitig zu erkennen, um entsprechende Maßnahmen vornehmen beziehungsweise einleiten zu können.

Insbesondere weist die Recheneinheit 2 eine Auswerteeinheit 16 auf. Beispielsweise kann es dabei um eine elektronische Auswerteeinheit handeln. Insbesondere kann die Auswerteeinheit 16 als lokale Korrelationskomponente beziehungsweise "local log correlation component" bezeichnet werden.

Hierzu kann beispielsweise in einem optionalen dritten Schritt S3 (vergleiche Figur 2) durch die Recheneinheit 2, insbesondere die Auswerteeinheit 16, überprüft werden, ob die bereitgestellten Log-Nachrichten 8 unter einer vorgegebenen Bedingung an die Lognachrichten-Speichereinheit 9 übertragen werden können. Hierbei kann beispielsweise unter der vorgegebenen Bedingung überprüft werden, ob die Log-Senke (Lognachrichten-Speichereinheit 16) erreichbar ist. Ebenfalls kann es sich bei der vorgegebenen Bedingung um eine Information handeln, ob es insbesondere innerhalb der Datenverbindung 10 einen Datenstau beziehungsweise Datenstausituationen gibt. Des Weiteren können bei Überprüfung der Bedingung ein Ausfall des Log-Relais 14, ein Ausfall eines SIEM-Systems, Hardware-Probleme mit der lokalen Netzwerkschnittstelle festgestellt werden. Wenn nun beispielsweise die Datenverbindung 10 vorliegt, insbesondere vollständig vorliegt (also funktionsfähig ist), können die Log-Nachrichten 8 automatisch an die Log-Senke übertragen werden. Hierbei können beispielsweise (mittels der Auswerteeinheit 16) die Log-Nachrichten 8 in dem lokalen Zwischenspeicher 12 für das Übertragen an die Lognachrichten-Speichereinheit 9 in einer vorgegebenen Übertragungsreihenfolge zwischengespeichert werden. Somit kann dem Zwischenspeicher 12 eine vorgegebene Warteschlange der Log-Nachrichten 8 erzeugt werden. Dies kann beispielsweise in einem optionalen vierten Schritt S4 erfolgen (vergleiche FIG 2) .

Sollte jedoch, beispielsweise in einem optionalen fünften Schritt S5 (vergleiche FIG 2) festgestellt werden, dass die vorgegebene Bedingung nicht erfüllt ist (also die Datenverbindung 10 beeinträchtigt beziehungsweise unterbrochen ist), können die Log-Nachrichten 8 in Abhängigkeit von einer Korrelationsbedingung 18 miteinander zu einer Kombinations-Lognachricht 17 oder zu mehreren Kombinations-Lognachrichten zusammengefügt beziehungsweise zusammengefasst werden. Insbesondere erfolgt dann, wenn keine Datenverbindung 10 vorliegt oder die Datenverbindung 10 beeinträchtigt ist, ein automatisches Zusammenfassen der Log-Nachrichten 8 zu der Kombinations-Lognachricht 17. Somit kann im Falle der Unerreichbarkeit der Log-Senke eine Aufbereitung der Log-Nachrichten 8 durchgeführt werden. Somit können beispielsweise im Falle der Nicht-Verfügbarkeit der Log-Senke (Lognachrichten-Speichereinheit 9) in Abhängigkeit von einer Dauer die Log-Nachrichten 8 und unterschiedlich stark miteinander korreliert werden und somit die lokal erzeugten Log-Daten (insbesondere in dem Zwischenspeicher 12) temporär an der Quelle (Recheneinheit 2) durch eine Aufbereitung ausgedünnt werden.

Beispielsweise kann entschieden werden, welche Verfahren zur Log-Aufbereitung (zum Beispiel Korrelation von mehreren Log-Nachrichten 8) nach welcher Zeitdauer verwendet werden sollen, kann hierbei in einer Richtlinie definiert, die lokal auf der Log-Quelle (Recheneinheit 2) gespeichert ist und zum Beispiel zentral von der Log-Senke beziehungsweise dem zugehörigen SIEM-System verwaltet wird, festgelegt werden. Diese Richtlinien (Korrelationsbedingungen) können entweder händisch definiert werden und/oder aufgrund bestehender Regeln auf dem SIEM-System oder dem Computernetzwerk-System 1 automatisch abgeleitet werden. Die Regeln einer Richtlinie umfassen neben der Log-Aufbereitungsinformation zusätzlich die Ausfalldauer, ab der die spezifizierte Log-Aufbereitungsmethode, zum Beispiel Korrelation beziehungsweise Zusammenfassung von Log-Nachrichten, anzuwenden ist. Die Ausfalldauer kann entweder über den Füllgrad der Warteschlange (also der Speicherkapazitätsauslastung des Zwischenspeichers 12) oder direkt ermittelt werden. Dies kann beispielsweise durch die Auswerteeinheit 12 erfolgen. Die Angabe des Füllgrads hat den Vorteil, dass unterschiedlich große Log-Volumina auf der Recheneinheit 12 einfacher zu handhaben sind und der Datenverlust gegenüber einer rein zeitgesteuerten Variante minimiert werden kann.

Bei der Korrelationsinformation beziehungsweise der Korrelationsbedingung 18 handelt es sich um Regeln, die definieren, welche Log-Nachrichten 8 gemeinsam eine Anomalie beschreiben und wie diese zu einer geringeren Anzahl an Kombinations-Lognachrichten 17 zusammengefasst werden können. Ein korrelierter Datensatz (also eine Kombinations-Lognachricht 17) kann erzeugt werden, indem aus n (unterschiedlichen oder gleichartigen) Log-Nachrichten 8 eine Kombinations-Lognachricht 17 erzeugt wird, in der die Information nicht vollumfänglich im Vergleich zu den jeweiligen Einzelinformationen enthalten ist, sondern zum Beispiel das Ergebnis aus einer Anomalie-Erkennung auf Basis dieser Log-Nachrichten 8 festgehalten wird. Da die Strukturen der einzelnen Log-Informationen der Log-Nachrichten 8 bekannt sind und Log-Nachrichten 8 in unterschiedlichen Feldern strukturiert sind, kann eine Korrelationsbedingung sowohl ein einzelnes Feld einer Log-Nachricht direkt adressieren und/oder gegebenenfalls mit Hilfe von regulären Ausdrücken definieren, welche Log-Nachrichten 8 miteinander zusammenzufassen sind.

Die Anwendung einer Regel beziehungsweise einer Korrelationsbedingung übernimmt die Auswerteeinheit 16, die entweder als Teil des lokalen "login-client" oder "login-daemon" (zum Beispiel ein syslog-daimon auf dem Gerät) oder als eigenständige Software-Komponente, insbesondere als Daemon oder Hintergrunddienst, realisiert sein kann. In der ersten Variante kann diese zum Beispiel auch als Plug-in realisiert sein. Grundsätzlich übernimmt die Auswerteeinheit 16 bei bestimmten Füllständen und nach einer bestimmten Zeit die Zusammenfassung der Log-Nachrichten 8.

Beispielsweise kann eine Zeitdauer, wie lange keine Datenverbindung 10 vorliegt oder wie lange die Datenverbindung 10 beeinträchtigt ist, bestimmt werden, wobei diese bestimmte Zeitdauer bei einem Zusammenfassen der Log-Nachrichten 8 berücksichtigt werden kann. Des Weiteren kann mit Hilfe der Korrelationsbedingung 18 festgelegt werden, welche Art oder welcher Typ von Log-Nachrichten 8 oder welche Menge an Log-Nachrichten 8 zu zumindest einer Kombinations-Lognachricht 17 zusammengefasst werden können. Des Weiteren kann eine Lognachrichten-Generierungsrate, mit welcher eine Anzahl an generierten Log-Nachrichten 8 pro Zeiteinheit durch die Recheneinheit 2 charakterisiert wird, bestimmt und bei dem Zusammenfassen der Log-Nachrichten 8 berücksichtigt werden. Bei der Lognachrichten-Generierungsrate handelt es sich insbesondere um eine aktuelle Login-Rate, wie zum Beispiel eine Anzahl der Log-Nachrichten 8 pro Sekunde (ermittelt über einen bestimmten Zeitraum).

Beispielsweise kann die Auswerteeinheit 16 den Füllgrad beziehungsweise eine aktuelle Auslastung des Zwischenspeichers 12 ermitteln, indem diese entweder direkt auf das Warteschlangenmanagement des Login-Daemons zugreift oder den Füllstand der temporär auf der Festplatte beziehungsweise dem Zwischenspeicher 12 persistierten Log-Daten ermittelt. In einer anderen Varianten bekommt die Korrelationskomponente (Auswerteeinheit 16) den Füllgrad durch den Login-Daemon direkt und in regelmäßigen Abständen über geeignete Schnittstellen (zum Beispiel bestimmte IPC-Mechanismen wie UNIX-Daemon-Sockets) übermittelt beziehungsweise kann diesen abfragen. Wird eine eigenständige, zum Beispiel nachgelagerte Korrelationskomponente verwendet, so verfügt diese beispielsweise über eine eigene Warteschlange, die auch von dieser verwaltet werden kann.

Beispielsweise kann mit Hilfe der Auswerteeinheit 16 eine aktuelle Auslastung des lokalen Zwischenspeichers 12 überprüft werden, wobei, wenn die Auslastung einen vorgegebenen Schwellwert überschreitet, die zwischengespeicherten Log-Nachrichten 8 in Abhängigkeit von der Korrelationsbedingung zumindest anteilig, insbesondere vollständig, miteinander zu der Kombinations-Lognachricht 17 zusammengefasst werden.

Beispielsweise kann eine Korrelationsbedingung 18 (correlation policy) bestimmt werden, ab welchem Füllstand beziehungsweise welcher Auslastung eine lokale Aufbereitung der Log-Nachrichten 8 stattfinden soll und wie die Aufbereitung stattzufinden hat. Ist beispielsweise der Füllgrad der Warteschlange (Zwischenspeicher 12) zu 70% (vorgegebener Schwellwert) erreicht, kann in der Richtlinie spezifiziert werden, dass Log-Nachrichten 8 gleichen Typs zusammengefasst werden. So können beispielsweise mehrere Log-Nachrichten 8, die jeweils die Modifikation einer überwachten Datei kontrollieren, in einer allgemeinen Nachricht beziehungsweise Kombinations-Lognachricht 17 (zum Beispiel "mehrere Änderungen von Daten") zusammengefasst werden. Die ursprünglichen Log-Nachrichten 8, die jede Änderung einzeln protokollieren, werden verworfen, und das lokale Log-Volumen auf der Recheneinheit 2 wird somit reduziert. Die Richtlinie kann für jede Komponente (Recheneinheit 2, 3) definiert und auf dieser abgelegt worden sein, oder zum Beispiel in regelmäßigen Abständen auf diese geladen werden (zum Beispiel, wenn Aktualisierungen der Richtlinien verfügbar sind). Die Richtlinie kann individuell für jede Komponente beziehungsweise Recheneinheit 2, 3 definiert werden.

Des Weiteren können in Abhängigkeit von der Auslastung des Zwischenspeichers 12 Log-Nachrichten 8, welche einen jeweiligen Zeitstempel aufweisen oder innerhalb eines vorgebaren Zeitintervalls generiert wurden, miteinander zu der Kombinations-Lognachricht 17 zusammengefügt werden.

Insbesondere können durch die weiteren Recheneinheiten 2, 3 weitere Log-Nachrichten 8 generiert werden, wobei die Log-Nachrichten 8 der Recheneinheiten 2, 3 in Abhängigkeit von ihrem Nachrichteninhalt zu zumindest einer oder mehreren Kombinations-Lognachrichten 17 zusammengefasst werden können.

Beispielsweise kann durchgeführt werden, dass bei Ausfall der Log-Senke lokal die von unterschiedlichen, auf der Recheneinheit 2 betriebenen Applikationen 15 erzeugten Log-Nachrichten 8 miteinander zusammengefasst werden. Ein Anwendungsbeispiel ist hierbei eine protokollierte Einreichung eines Administrator-Zugriffs, zum Beispiel über "SUDO" auf einem Linux-System, welcher sämtliche ausgeführten Programme zusammenfassen kann. Werden normalerweise alle ausgeführten Programme protokolliert, kann diese Information auf einige wenige Programme, deren Ausführung als potenziell schadhaft für die Systemintegrität oder Vertraulichkeit bestimmter Daten eingestuft wird, reduziert werden. Durch den Ausfall der Log-Senke (Lognachrichten-Speichereinheit 9) und die damit verbundene lokale Aufbereitung in der Recheneinheit 2 geht die genaue Information über die Programme beziehungsweise Applikationen 15, die insbesondere ausgeführt wurden, verloren. Allerdings kann hier durch die lokale Zusammenfassung somit schon ermittelt werden, ob es sich um ein schadhaftes Verhalten handeln oder nicht.

Ein weiteres Beispiel ist das Zusammenfassen der Log-Nachrichten 8 aus mehreren (fehlgeschlagenen) Login-Versuchen ausgehend von einer bestimmten IP-Adresse innerhalb eines bestimmten Zeitraums zu einer einzigen Kombinations-Lognachricht 17. Diese kann dann beschreiben, dass es einen möglichen Einbruchsversuch in die Recheneinheit 2 von einer bestimmten IP-Adresse aus gegeben haben könnte. Die neue Nachricht (Kombinations-Lognachricht 17) könnte dadurch zum Beispiel auch eine höhere "Severity" bekommen als die vorherigen Nachrichten.

So können generell, je nach Füllgrad der Warteschlange (des Zwischenspeichers 12) auch nur noch Log-Nachrichten 8 mit einer bestimmten Kritikalität (die zum Beispiel anhand der Severity der Log-Nachrichten 8 gefüllt wird) oder von bestimmten wichtigen Anwendungen innerhalb der Recheneinheit 2 zusammengefasst werden und der Rest verworfen werden. In einer Variante können auch die Log-Regeln auf der Recheneinheit 2 selbst angepasst werden. Werden beispielsweise bei Verfügbarkeit der Log-Senke und niedrigem Füllstand der Warteschlange sämtliche Systemaufrufe ("system calls") von Applikationen 15 gelockt, kann zum Beispiel bei Ausfall der Log-Senke und/oder zu hohem Füllgrad der Warteschlange das Protokollieren von Systemaufrufen auf einen bestimmten Satz von Systemaufrufen oder bestimmten Applikationen 15 eingeschränkt werden.

Beispielsweise kann die lokale Aufbereitung der Log-Nachrichten 8, je nachdem, welche Log-Senke nicht erreichbar ist, auf unterschiedlichen Recheneinheiten 2, 3 stattfinden. Fällt beispielsweise der Log-Relais 14 aus, kann die lokale Zusammenfassung beziehungsweise Aufbereitung der Log-Nachrichten 8 auf dem jeweiligen Netzwerkteilnehmer (Automatisierungskomponente beziehungsweise Recheneinheiten 2, 3) stattfinden. Im Falle der Nicht-Verfügbarkeit der externen Log-Senke beziehungsweise der Lognachrichten-Speichereinheit 9 kann auch der Log-Relais 14 die Zusammenfassung der Log-Nachrichten 8 der unterschiedlichen Recheneinheiten 2, 3 übernehmen.

Des Weiteren kann beispielsweise durch die Auswerteeinheit 16 festgelegt werden, dass ab einem bestimmten Füllgrad nur neu auftretende Log-Nachrichten 8 zusammengefasst werden. In einer weiteren Varianten könnten ab einem bestimmten Füllgrad auch die schon bereits in der Warteschlange befindlichen Log-Nachrichten 8 für eine Zusammenfassung verwendet werden und bestimmte andere Log-Nachrichten 8 verworfen werden. Dies könnte zum Beispiel bis zum Erreichen eines definierten, niedrigen Füllgrads mit Beginn der ältesten Log-Nachrichten 8 durchgeführt werden. Wird dieser Füllgrad mit Hilfe der lokalen Log-Aufbereitung erreicht, kann das Verhalten auch wieder auf ein reines "Puffern" beziehungsweise "Zwischenspeichern" umgestellt werden, bis entweder die Senke wieder erreichbar ist oder ein höherer, kritischer Füllstand erreicht wird. Durch sämtliche Korrelationen beziehungsweise Zusammenfassungen wird somit die Warteschlange in der Recheneinheit 2 reduziert und sichergestellt, dass zur Einbruchserkennung relevante Einträge auf dem Computernetzwerk-System 1 über einen längeren Zeitraum vorgehalten werden können.

Beispielsweise ist durch eine auf einem SIEM-System durchgeführte Korrelation diesem bekannt, welche Daten eines Computernetzwerk-Systems 1 an zentraler Stelle üblicherweise zur Laufzeit miteinander korreliert werden. Hierdurch kann das SIEM-System auch automatisch Richtlinien ermitteln, die auf die lokalen Systeme verteilt werden können und welche die Daten dort bereits lokal korrelieren beziehungsweise zusammenfassen. Diese Korrelation kann mit Hilfe der auf die Zielsysteme verteilten Richtlinien entweder dauerhaft, abhängig vom Füllstand der Warteschlange oder in Abhängigkeit der aktuellen Login-Rate (Anzahl der Log-Nachrichten pro Sekunde) durchgeführt werden.

Insbesondere ist es von Vorteil, wenn das Zusammenfassen der Log-Nachrichten 8 nicht permanent durchgeführt wird. Somit kann eine dauerhafte Blockierung von Ressourcen der Recheneinheiten 2, 3 verhindert werden. Ebenfalls kann verhindert werden, dass eine forensische Analyse nicht mehr möglich oder zumindest beeinträchtigt ist.

In einem optionalen sechsten Schritt S6 (vergleiche FIG 2) kann die Kombinations-Lognachricht 17 in dem lokalen Zwischenspeicher 12 abgelegt werden, solange die vorgegebene Bedingung nicht erfüllt ist, und, falls die vorgegebene Bedingung erfüllt ist, kann die Kombinations-Lognachricht 17 unmittelbar automatisch an die Lognachrichten-Speichereinheit 9 übertragen werden.

Somit kann in einem abschließenden, insbesondere optionalen, siebten Schritt S7 die Kombinations-Lognachricht 17 an die Lognachrichten-Speichereinheit 9 übertragen werden.

## Patentansprüche

1. Verfahren zum Aufbereiten von Lognachrichten (8) in einem Computernetzwerk-System (1),
**dadurch gekennzeichnet, dass**
- die Lognachrichten (8) von einer Recheneinheit (2) des Computernetzwerk-Systems (1) generiert werden,
- die generierten Lognachrichten (8) von der Recheneinheit (2) zur Übertragung an eine Lognachrichten-Speichereinheit (9) des Computernetzwerk-Systems (1) bereitgestellt werden,
- die Recheneinheit (2) überprüft, ob die bereitgestellten Log-Nachrichten (8) unter einer vorgegebenen Bedingung an die Lognachrichten-Speichereinheit (9) übertragen werden können, und
- falls nicht: die bereitgestellten Log-Nachrichten (8) in Abhängigkeit von einer Korrelationsbedingung (18) miteinander zu einer Kombinations-Lognachricht (17) zusammengefasst werden, und
- die Kombinations-Lognachricht (17) an die Lognachrichten-Speichereinheit (9) übertragen wird.

2. Verfahren nach Anspruch 1, **dadurch gekennzeichnet, dass** die bereitgestellten Lognachrichten (8) automatisch an die Lognachrichten-Speichereinheit (9) übertragen werden, wenn eine Datenverbindung (10) zur Übertragung von Daten zwischen der Recheneinheit (2) und der Log-Nachrichten - Speichereinheit (9) vorliegt.

3. Verfahren nach Anspruch 2, **dadurch gekennzeichnet, dass** wenn festgestellt wird, dass zwischen der Recheneinheit (2) und der Lognachrichten-Speichereinheit (9) keine Datenverbindung (10) vorliegt oder die Datenverbindung (10) beeinträchtigt ist, die Lognachrichten (8) automatisch zu der Kombinations-Lognachricht (17) zusammengefasst werden.

4. Verfahren nach Anspruch 3, **dadurch gekennzeichnet, dass** eine Zeitdauer, wie lange keine Datenverbindung (10) vorliegt oder wie lange die Datenverbindung (10) beeinträchtigt ist, bestimmt wird, wobei die bestimmte Zeitdauer bei dem Zusammenfassen der Lognachrichten (8) berücksichtigt wird, insbesondere die bestimmte Zeitdauer die Korrelationsbedingung (18) beeinflusst.

5. Verfahren nach Anspruch 3 oder 4, **dadurch gekennzeichnet, dass** die Kombinations-Lognachricht (17) automatisch an die Lognachrichten-Speichereinheit (9) unmittelbar dann übertragen wird, wenn durch die Recheneinheit (2) festgestellt wird, dass eine Datenverbindung (10) zwischen der Recheneinheit (2) und der Lognachrichten-Speichereinheit (9) wieder vorliegt.

6. Verfahren nach einem der vorhergehenden Ansprüche, **dadurch gekennzeichnet, dass** die Kombinations-Lognachricht (17) in einem lokalen Zwischenspeicher (12) der Recheneinheit (2) abgelegt wird solange die vorgegebene Bedingung nicht erfüllt ist und falls die vorgegebene Bedingung erfüllt ist, die Kombinations-Lognachricht (17) unmittelbar automatisch an die Lognachrichten-Speichereinheit (9) übertragen wird.

7. Verfahren nach einem der vorhergehenden Ansprüche, **dadurch gekennzeichnet, dass** mit der Korrelationsbedingung (18) festgelegt wird, welche Art oder welcher Typ von Log-Nachrichten (8) oder welche Menge an Lognachrichten (8) zu der Kombinations-Lognachricht (17) zusammengefasst werden können, insbesondere die Korrelationsbedingung (18) durch das Computernetzwerk-System (1) bestimmt und der Recheneinheit (2) übermittelt wird.

8. Verfahren nach einem der vorhergehenden Ansprüche, **dadurch gekennzeichnet, dass** eine Lognachrichten-Generierungsrate, mit welcher eine Anzahl an generierten Lognachrichten (8) pro Zeiteinheit durch die Recheneinheit (2) charakterisiert wird, bestimmt und bei dem Zusammenfassen der Lognachrichten (8) berücksichtigt wird.

9. Verfahren nach einem der vorhergehenden Ansprüche, **dadurch gekennzeichnet, dass** die generierten Lognachrichten (8) der Recheneinheit (2) in einem lokalen Zwischenspeicher (12) der Recheneinheit (2) für das Übertragung an die Lognachrichten-Speichereinheit (9) zwischengespeichert werden, wobei die Lognachrichten (8) dabei in einer vorgegebenen Übertragungsreihenfolge für das Übertragen zwischengespeicherten werden.

10. Verfahren nach Anspruch 9, **dadurch gekennzeichnet, dass** eine aktuelle Auslastung des lokalen Zwischenspeichers (12) überprüft wird, wobei wenn die Auslastung einen vorgegebenen Schwellwert überschreitet, die zwischengespeicherten Lognachrichten (8) in Abhängigkeit von der Korrelationsbedingung (18) zumindest anteilig miteinander zu einer Kombinations-Lognachricht (17) zusammengefasst werden.

11. Verfahren nach Anspruch 10, **dadurch gekennzeichnet, dass** in Abhängigkeit von der Auslastung des Zwischenspeichers (12) Lognachrichten (8), welche einen jeweiligen Zeitstempel aufweisen oder innerhalb eines vorgebaren Zeitintervalls generiert wurden, miteinander zu einer Kombinations-Lognachricht (17) zusammengefügt werden.

12. Verfahren nach einem der vorhergehenden Ansprüche, **dadurch gekennzeichnet, dass** durch weitere Recheneinheiten (3) des Computernetzwerk-Systems (1) weitere Lognachrichten (8) generiert werden, wobei die Lognachrichten (8) der Recheneinheit (2) und die Lognachrichten (8) der weiteren Recheneinheiten (3) in Abhängigkeit von ihrem Nachrichteninhalt zu einer Kombinations-Lognachricht (17) zusammengefasst werden.

13. Computernetzwerk-System (1) mit,
- einer Lognachrichten-Speichereinheit (9),
- zumindest einer Recheneinheit (2, 3) zum Generieren von Lognachrichten (8),
- einem lokalen Zwischenspeicher (12) der zumindest einen Recheneinheit (2, 3) zum Bereitstellen der generierten Lognachrichten (8) von der zumindest einen Recheneinheit (2, 3),
- einer Schnittstelle (13) der zumindest einen Recheneinheit (2, 3) zur Übertragung der Lognachrichten (8) an die Lognachrichten-Speichereinheit (9), und
- einer Auswerteeinheit (16) der zumindest einen Recheneinheit (2, 3) zum Überprüfen, ob die Lognachrichten (8) unter einer vorgegebenen Bedingung an die Lognachrichten-Speichereinheit (9) übertragen werden können, wobei
- die Auswerteeinheit (16) ausgebildet ist, die Lognachrichten (8) in Abhängigkeit von einer Korrelationsbedingung (18) miteinander zu einer Kombinations-Lognachricht (17) zusammenzufassen, falls die Log-Nachrichten (8) nicht an die Lognachrichten-Speichereinheit (9) übertragen werden können, und
- die Schnittstelle (13) ausgebildet ist, die Kombinations-Lognachricht (17) an die Lognachrichten-Speichereinheit (9) zu übertragen.

14. Computerprogramm (6), welches direkt in einen Speicher (5) einer Steuereinrichtung (4) eines Computernetzwerk-Systems (1) nach Anspruch 13 ladbar ist, mit Programm-Mitteln, um die Schritte des Verfahrens nach einem der Ansprüche 1 bis 12 auszuführen, wenn das Programm (10) in der Steuereinrichtung (4) des Computernetzwerk-Systems (1) ausgeführt wird.

15. Elektronisch lesbarer Datenträger (7) mit darauf gespeicherten elektronisch lesbaren Steuerinformationen, welche derart ausgestaltet sind, dass sie bei Verwendung des Datenträgers (7) in einer Steuereinrichtung (4) eines Computernetzwerk-Systems (1) nach Anspruch 13 ein Verfahren nach einem der Ansprüche 1 bis 12 durchführen.
